# EUROPEAN PATENT SPECIFICATION

(11) **EP 3 104 681 B1**
(45) Date of publication and mention of the grant of the patent: **02.10.2019**
(21) Application number: 15705222.6
(22) Date of filing: 04.02.2015
(51) Int. Cl.: A01G 9/08

(54) **AN APPARATUS AND A METHOD FOR APPLICATION OF A LIQUID MEDIUM TO SEEDLINGS**
VORRICHTUNG UND VERFAHREN ZUR ANWENDUNG EINES FLÜSSIGEN MEDIUMS BEI SÄMLINGEN
APPAREIL ET PROCÉDÉ D'APPLICATION DE MILIEU LIQUIDE À DES SEMIS

(30) Priority: 10.02.2014 SE 1450140
(43) Date of publication of application: 21.12.2016
(73) Proprietor: Södra Skogsägarna ekonomisk förening, 351 89 Växjö (SE)
(72) Inventor: ALVEHUS, Andreas, 311 97 Falkenberg (SE); JOHANSSON, Alrik, 311 37 Falkenberg (SE)
(74) Representative: AWA Sweden AB
(86) International application number: PCT/EP2015/052258
(87) International publication number: WO 2015/117993

(56) References cited:
- GB-A- 1 405 214
- NL-A- 8 702 850
- US-A- 5 365 693
- US-A1- 2004 049 974
- US-A1- 2007 000 171

## Description

### TECHNICAL FIELD

The present invention relates to an apparatus for application of a liquid medium to seedlings, said seedlings comprising trunks extending in a vertical direction and being arranged in rows in a culture vessel, said apparatus comprising a first aligning means movable in a first horizontal direction, a displacement means arranged to provide a displacing movement between said culture vessel and said first aligning means, said first aligning means being arranged to be inserted between said rows of said seedlings, and an application means arranged to deliver said liquid medium to the trunks of said seedlings, said application means being movable in the vertical direction. The present invention further relates to a method for application of a liquid medium to seedlings arranged in rows in a culture vessel.

### BACKGROUND OF THE INVENTION

Reforestation is a necessary, and in several countries by law prescribed method to achieve a sustainable forestry. One method is to leave selected seed-trees on the clear-cutting, another method is to plant seedlings after different kinds of soil preparation. The methods can be used in combination. Planting of seedlings is used to assure that a certain plant density is achieved on the regeneration area.

Many dangers, e. g. drought and attacks from wild animals and insects, threaten the development of a managed forest stand. A high rate of survival of the plants means reduced costs for the reforestation and increased future income.

Weevils belonging to the family *Curculionidae* (the true weevils) are beetles known as pests of trees. Large pine weevil (*Hylobius abietis*) is a widespread insect and the most significant pest insect in the forest regeneration phase. Its close relatives include e.g. *Hylobius pinastri* and *Hylobius albosparsus*, which are well known pests.

Large pine weevils swarm in May-June and they lay eggs in the soil, on the bark or cortex of a rotting wood in the vicinity of fresh stumps. The larvae live in the soil in the roots of stumps under the bark for 2- 5 years and feed on phloem, after which they pupate into the root's surface part. Once the larva grows up, it tunnels into the soil surface. Adult insects gnaw the bark on the base of young seedlings and use phloem and cambium for nutrition.

Large pine weevil's eating habits mostly destroy 1-3-year-old planting seedlings of pines and spruces, but it is almost omnivorous in terms of woody food plants, making both coniferous trees and broad-leaved trees its potential nutrition. The eating goes on for the whole summer but is most intense in the beginning of the summer. Damages in the seedling's bark expose the seedling to fungal damage. In seedlings where the bark has been eaten annularly around the trunk, the fluid and nutriment flow is prevented, eventually resulting in the death of the seedling. Young seedlings develop a resistance against large pine weevils in Northern regions around the age of 3-5 years. Elsewhere in Europe, e.g. in Scotland, the eating may continue for up to 8-10 years after the planting.

The length of the large pine weevil's lifecycle varies from one year in Southern distributions to three years in Northern regions. The large pine weevil adults can be found all year round, although they usually hibernate during the cold winter months. The adult insect's movement depends for instance on the climate and the vicinity of the sea. The insects move on to a fresh logging opening usually within a 10 kilometer radius, but they can also fly up to 80 km. Once they get to a suitable breeding ground, their flying muscles atrophy and the insects primarily move about by walking.

The large pine weevil has spread to the entire Europe and Asia and it causes remarkable damages to forestry. It can be found especially in coniferous forests and very commonly also in timber handling and sawing areas. Fresh logging waste and the mixture of ethanol and alpha-pinene attract the large pine weevil in early summer during the swarming season. It is therefore extremely difficult to prevent the large pine weevil from breeding in logging openings, as tree stumps and logging waste should be removed entirely in order to prevent the development of larvae.

A number of methods have been presented for controlling the damages from the large pine weevil. These methods may be divided into chemical and mechanical.

The chemical methods include treating the seedlings with insecticides in the nurseries before the planting, treating the seedlings with insecticides in the ground, wherein a backpack pressure sprayer or the dipping method is usually used, or blending the insecticide in the planting hole or soil. However, the use of chemical substances have been restricted or fully prohibited, since all plant-protecting agents acceptable for the control of large pine weevils are extremely toxic to the water system and fish in particular.

Seedlings may also be protected with different kinds of mechanical solutions, the purpose of which is to prevent the large pine weevil from getting on the trunk of the seedlings. In structure, these mechanical solutions may be shells, cones, socks or wax- or latex-based agent.

US-A-5365693 discloses an apparatus for application of a liquid medium.

EP 0 765 113 discloses a method of reducing the insect damage on the seedlings by covering the lower part of the stem with a protective layer, such as wax or latex. The plant seedlings are placed on a tray in several rows, and in order to obtain the coating covering the whole circumference of the stems, the following spraying system was developed. Spraying nozzles were placed on pipes, and in order to be able to coat several rows with plant seedlings at a time, several such pipes were interconnected by forming a fork having several fork fingers or several pipes arranged in parallel rows on the coating reservoir. The spraying system can either be stationary or moveable. If the system is stationary, the plant seedlings on the tray are transported in-between the pipes, and if the system is moveable the fork fingers or the pipes can either be transported horizontally in-between the plant seedlings or vertically in-between the plant seedlings. The spraying angle, both horizontal and vertical can be regulated, this regulation could at least be obtained by varying the pressure of the coating supplied to the nozzles.

SE 506 271 discloses a device for application of an insect-proof medium to saplings. The device includes a locating device, which places a cultivation vessel in a predetermined position, and a movement device, which moves the vessel with respect to the vessel and a group of directional components. The directional components each have a long spacing part, which is introduced lengthwise by the movement into the intermediate space between two adjacent plant rows. There is an inclined front part at the front end of the spacing part. The lower end of the front part is foremost in the movement direction. The lower end fits partly over the cultivation vessel edge. A group of tubes, one for each plant, is directed towards the plant stems at a distance above the cultivation substrate. The applied medium is allowed to flow down from the application point along the stems of the saplings to the upper surface of the cultivation substrate.

These methods suffer from the disadvantage of providing an uneven distribution of the protective layer.

WO 2013/030771 discloses a waxing machine for applying wax to plants with a trunk, which waxing machine comprises a conveyer belt for transport of the plants and at least one wax vat. The at least one wax vat is filled with liquid wax when the waxing machine is in use, and is arranged for travel in a path. The at least one wax vat, over a waxing distance, is arranged near the conveyer belt. Furthermore, the conveyer belt's movement and the at least one wax vat's movement are synchronized so that the trunk of a plant on the conveyer belt is passed over or lowered into the at least one wax vat and coated with wax as the plant on the conveyer belt and the at least one wax vat travel over the waxing distance. The waxing machine of WO 2013/030771 has the disadvantage of being complicated.

EP 2 638 801 describes a method for controlling weevils belonging to the family *Curculionidae*, comprising the steps where a tree seedling is planted in soil and, in connection with the planting, a layer of protective material is applied on the soil surrounding the seedling. This method is very time-consuming, since large areas need to be treated.

Another apparatus for mechanical protection of seedlings is disclosed in EP 2 250 877. The apparatus disclosed in EP 2 250 877 is configured for applying a tube-shaped sleeve onto a seedling standing in a cultivation cell formed in a cultivation cassette comprising at least one row of cultivation cells. The apparatus comprises positioning means for positioning of the cultivation cassette relative to a holder for sleeves, movable and driven for reciprocating motion in the length direction of a seedling to effect insertion of the seedling into a sleeve such that the sleeve extends about the seedling in at least a portion of the length of the seedling.

WO 91/12717 discloses a method of preventing the advance of insects by placing a mechanical barrier in the path of the insects. The barrier has the form of a material composed of a large number of thin, thread-like fibers which are loosely placed together or loosely joined together to form a manageable material composition, such that when coming into contact with the material, an insect can experience the fibers as being the threads of a cobweb and be repelled thereby.

The methods suggested in EP 2 250 877 and WO 91/12717 imply that the material used for mechanical protection will remain in the environment even when no longer needed, which may negatively affect other species naturally occurring in the area.

EP 1 427 282 discloses a formulation with particles of a controlled particle size distribution, fixed in an elastic coating, that is applied, either separately or in mixture, in order to prevent attacks by gnawing animals, especially insects, to seedlings. The particles must be distributed on the covered or coated surface, so that the principal distance between two particles is less than the width of the pine weevil's snout. Then the snout cannot be inserted between two particles. The particulate material has a narrow particle size distribution with a mean particle diameter preferably in the range 0.1 to 0.5 mm. This method has the disadvantage of making great demands on the particle size distribution in order to provide an effective protection of the seedlings. Further, the protective layer obtained according to this method is rather uneven, which may provide sites wherein the pine weevil is able to damage the plants.

Therefore, there exists a need for new, efficient and environmentally friendly method for protection of seedlings. The present invention provides such a method, as well as an apparatus for protection of seedlings.

### DEFINITIONS

By "seedling" is meant a potted young plant or sapling, particularly conifer sapling, intended to be set out, for instance in an open ground or a clear-cut area.

By "culture vessel" is meant a container comprising a plurality of seedlings arranged in rows.

By "culture medium" in meant the medium in which the seedlings are planted, for instance soil, sand, mould, peat or mixtures thereof.

By "liquid medium" is meant a medium suitable for application to the seedlings in order to prevent damage of the seedlings. The liquid medium may be paint, particularly latex paint, glue, wax, but also insecticides, fungicides or the like.

### SUMMARY OF THE INVENTION

According to the present invention, an apparatus for application of a liquid medium to seedlings is provided. The seedlings comprise trunks extending in a vertical direction and being arranged in rows in a culture vessel. The seedlings may be of any suitable botanical species; however, the most common type of seedlings that needs to be treated using the apparatus of the present invention is conifer saplings, such as pines and spruces.

The apparatus comprises a first aligning means movable in a first horizontal direction and a displacement means arranged to provide a displacing movement between the culture vessel and the first aligning means. The first aligning means may be in the form of at least two parallel rods or rulers, wherein one of the terminal points of each rod or ruler is interconnected with the adjacent terminal points of any adjacent rod or ruler. In other words, the first aligning means may be comb-shaped. The first aligning means is arranged to be inserted between the rows of seedlings. Alternatively, the culture vessel comprising rows of seedlings may be displaced in relation to the first aligning means such that the rows of seedlings are inserted in the aligning means and becomes positioned between the rulers of the aligning means. The purpose of the first aligning means is to position the seedlings in straight rows and to hold the seedlings in place in order to increase the precision of the application of the liquid medium. Even if the seedlings are arranged in rows in the culture vessel, there may be alignment imperfections, which are eliminated by the aligning means. The number of rods or rulers in the first aligning means may vary. The number of rods in the aligning means may for instance correspond to the number of rows in the culture vessel. Preferably, the number of rods in the aligning means is from 2 to 15, but any other number of rods is conceivable. Further, the rods may be of any suitable cross-sectional shape, such as circular, rectangular, square, pentagonal or rhombic, as long as the rods are insertable between the rows of seedlings. The spacing distance between two adjacent rods may vary, and can be selected depending on the size of the seedlings to be treated. Preferably, the distance between two adjacent rods may be in the interval from 5 mm to 20 mm, preferably from 7 mm to 10 mm, more preferably approximately 8 mm. The distance between two adjacent rods should be large enough not to damage the seedlings, and small enough to provide a sufficient support for the seedlings. High uniformity of the seedlings provides a possibility for diminishing distance between the rods.

The apparatus of the present invention further comprises an application means movable in the vertical direction and arranged to deliver the liquid medium to the trunks of the seedlings. Further, the application means is arranged to deliver the liquid medium to the trunks of the seedlings during a vertical movement along the trunks of the seedlings.

The application of the liquid medium may be performed during a downward vertical movement, i.e. while the application means is moving down along the trunks of the seedlings. In such an embodiment, the application means is brought into a starting position being arranged at a suitable point on the trunks of the seedlings, for instance from 10 to 20 cm from the uppermost layer of the culture medium in which the seedlings are grown. The application means is then activated to deliver the liquid medium during the vertical downward movement of the application means from the starting point to an end point being arranged just above the uppermost layer of the culture medium.

Alternatively, the application of the liquid medium may be performed during an upward vertical movement, i.e. while the application means is moving up along the trunks of the seedlings. In such an embodiment, the application means is brought into a starting position being arranged at the uppermost layer of the culture medium in which the seedlings are grown. The application means is then activated to deliver the liquid medium during the vertical upward movement of the application means from the starting point to a suitable end point, for instance a point being arranged from 10 to 20 cm above the uppermost layer of the culture medium. Application of the liquid medium during the upward vertical movement has the advantage of providing less risk for damaging the branches of the seedlings, since during the upward vertical movement of the application means along the trunk, the branches that may be caught by the application means will become aligned with the trunk, and released to their original position when the application of the liquid medium is completed and the application means is removed.

Sometimes it may be desired to make several subsequent applications of the liquid medium to the seedlings. In this case, the liquid medium may be applied sequentially during upward and downward vertical movements. The liquid medium may also be applied in several application steps performed during a vertical movement, wherein each application step is performed in the same vertical direction, i.e. upward vertical movement or downward vertical movement.

The application means is arranged to move with a speed of from 10 mm/s to 80 mm/s during the delivery of the liquid medium. The speed of the application means can be adjusted depending on the type of the liquid medium to be applied, as well as the desired thickness of the deposition of liquid medium on the trunk. The speed of the application means may be constant or may vary during the same application step. Also, the speed of the application means may be constant at each application step, or may be changed from one application step to another, depending on the properties of the seedlings to be treated at each step.

The application means may further be movable in a horizontal direction. The horizontal direction of the application means may coincide with the horizontal direction of the aligning means, or may be different from the horizontal direction of the aligning means. For example, the horizontal direction of the application means may be perpendicular to the horizontal direction of the aligning means. When the application means is movable in a horizontal direction, the application means is inserted between the rows of seedlings in a culture vessel in the horizontal direction of the application means and positioned at its starting point as described above. The application means is then activated to deliver the liquid medium during the upward vertical movement, downward vertical movement, or a sequence of downward and upward vertical movements from the starting point to an end point as described above.

The apparatus according to the present invention may further comprise a second aligning means. The second aligning means is movable in a second horizontal direction perpendicular to the first horizontal direction of the first aligning means, such that the second aligning means may be inserted between the rows of seedlings perpendicularly to the first aligning means. The second aligning means may be of the same construction as the first aligning means, i.e. comb-shaped. The distance between each two adjacent rods of the second aligning means may be in the interval from 5 mm to 20 mm, preferably from 7 mm to 10 mm, more preferably approximately 8 mm. As mentioned above, the distance between each two adjacent rods should be large enough not to damage the seedlings, and small enough to provide a sufficient support for the seedlings.

When the second aligning means is inserted between the rows of seedlings perpendicularly to the first aligning means, each seedling will be enclosed in a rectangular or square space delimited by the first and second aligning means. The size of the space enclosing each seedling depends on the distance between the rulers of the first and second aligning means. The space enclosing each seedling may be from 5x5 mm to 20x20 mm, preferably from 7x7 mm to 10x10 mm, more preferably approximately 8x8 mm.

Providing a second aligning means as described above is advantageous, since when the second aligning means is present, the seedlings are securely held in the desired position, which increases the precision of the application step, thus avoiding staining of the branches of the seedlings as well as the apparatus and the space around it with the liquid medium, which in turn keeps the apparatus and the space around it clean and tidy, provides more vital plants and keeps the consumption of the liquid medium to a minimum.

The application means according to the present invention may comprise a plurality of conduits, wherein each conduit comprises a plurality of nozzles. The conduits may be interconnected by a duct, such that a flow of the liquid medium is supplied through the duct to the interconnection point, wherein the flow is subsequently split to enter the conduits. Alternatively, the flow of the liquid medium in each conduit may be independent from the flow of the liquid medium in the other conduits of the application means. In such an embodiment, it is possible to change the flow of the liquid medium in each conduit independently from each other, which makes the apparatus more flexible.

As mentioned above, the conduits may be movable in a first horizontal direction being parallel with the first horizontal direction of the first aligning means, such that the conduits may be inserted between the rows of seedlings parallel with the first aligning means.

Alternatively, the conduits may be movable in a first horizontal direction being parallel with the second horizontal direction of the second aligning means, such that the conduits may be inserted between the rows of seedlings parallel with the second aligning means.

According to the present invention, the nozzles may be arranged such that at least two nozzles are directed towards each of the seedlings. The number of nozzles being directed towards each seedling may vary, for instance from two to six nozzles. Preferably, the application means of the apparatus according to the present invention comprises four nozzles. In order to achieve an even application of the liquid medium, the nozzles are preferably evenly distributed around the circumference of the trunks of the seedlings. Thus, when two nozzles are used, the nozzles are preferably positioned opposite to each other, i.e. with an angle of 180° in relation to each other, the nozzle outlets facing each other and pointing towards the trunk. When three nozzles are used, the angle between the nozzles is preferably 120°, when four nozzles are used the angle may be 90°, and so on. The distance between the nozzle outlets should be small enough to minimize the distance from each of the nozzle outlets to the trunk, and large enough not to damage the seedling. When four nozzles are used, the distance between the nozzle outlets measured between the adjacent edges of the nozzle outlets may be 10-40 mm, preferably 15-30 mm.

According to the present invention, the conduits may be movable in two perpendicular horizontal directions. In such an embodiment, the conduits are inserted between the rows of seedlings in a first horizontal direction being parallel with either the first horizontal direction of the first aligning means, or the second horizontal direction of the second aligning means as described above. Thus, the conduits become positioned at a certain distance from the trunks of the seedlings. The conduits are then displaced in a second horizontal direction being perpendicular to the first horizontal direction of the conduits, such that the distance between the conduits and the trunks is diminished, and the seedlings become locked by the nozzles, which will ensure accurate application of the liquid medium. When four nozzles are used, the distance between the nozzle outlets measured between the adjacent edges of the nozzle outlets when the conduits have been displaced in the second horizontal direction may be 1-5 mm, preferably 2-4 mm, more preferably 3 mm.

The conduits of the application means according to the present invention may further comprise a supporting rim running along each conduit, comprising an outer edge portion and being arranged at the upper portion of each conduit. The supporting rim has an extension in the direction perpendicular to the longitudinal extension of the conduit, such that the outer edge of the supporting rim protrudes beyond the conduit in the transverse direction of the conduit. The supporting rim provides additional support for seedlings, which allows greater variations in the diameter of the seedling trunks. The distance between the outer edge portions of the supporting rims arranged at two adjacent conduits may be 4-11 mm, preferably 5-8 mm, more preferably 6 mm. The supporting rim may be attached to the upper portion of the conduit by sandwiching the supporting rim between the upper portion of the conduit and a fastening strip of material superimposed with the upper portion of the conduit, and attaching the fastening strip to the conduit by fastening means. The supporting rim may be manufactured from any material suitable for the purpose, such as metal, plastic, rubber, or the like. Preferably, the supporting rim is hard enough to provide support for the seedlings arranged between the conduits, and soft enough not to damage the seedlings. The fastening strip may be of any material suitable for the purpose, such as metal, plastic or the like. The fastening strip may be permanently or detachably attached to the conduit. The permanent fastening means may be glue, welds or rivets. The detachable fastening means may be bolt and nut, screws, clamps, brackets or the like.

The apparatus according to the present invention may further comprise a plant lifting means. The plant lifting means is arranged to displace the seedling in relation to the culture vessel in the vertical direction by lifting the seedlings either by grasping the top portion of the seedlings, or pushing towards the culture medium of the seedlings through openings arranged at the bottom portion of the culture vessel. The latter alternative has the advantage of providing a lower risk for damaging the seedlings. The purpose of lifting the seedlings is to facilitate application of the liquid medium all the way to the point where the trunk is in contact with the culture medium. Another reason for lifting the seedlings is to centre the seedling inside the space defined by the aligning means as described above, in cases when the seedlings are not centred inside the culture vessel.

When the plant lifting means is arranged to lift the seedlings by pushing through the openings arranged at the bottom portion of the culture vessel, the plant lifting means may be positioned below the culture vessel in the vertical direction and may comprise a plurality of pushing bars for pushing each of the seedlings in an upward vertical direction. Each pushing bar is activated to be inserted into a corresponding opening at the bottom portion of the culture vessel and to push the culture medium such that the seedling is displaced in the vertical direction.

In order to make the deposited layer of liquid medium more even, the apparatus according to the present invention may further comprise a shaker. The shaker may be in the form of a device comprising a horizontal surface on which the culture vessel is positioned after the liquid medium has been applied, and a vibration means for providing vibrating movements of the shaker. The vibrating movements of the shaker will be transferred to the liquid medium on the trunks and will cause the liquid medium to vibrate as well, which in turn will result in a more even layer of liquid medium.

In order to deliver the liquid medium to the application means, the apparatus according to the present invention may comprise a pumping means. The pumping means may be of any kind suitable for the purpose and known to the person skilled in the art. Particularly, the pumping means may comprise a membrane pump, a servomotor and a plurality of dispensing chambers. Each of the dispensing chambers may comprise an inlet, an outlet and a piston arranged inside the dispensing chamber. The dispensing chamber may be of any suitable shape, such as cylindrical. The piston is movable inside the dispensing chamber between a start position wherein the dispensing chamber is filled with the liquid medium, and a stop position, wherein the piston has emptied the dispensing chamber by forcing the liquid medium through the outlet out from the dispensing chamber, and into the application means. The volume of the dispensing chambers may be varied by providing the dispensing chambers with a volume control means, for instance in the form of a movable plate arranged outside the dispensing chambers, and being able to define the start position of the piston. The number of dispensing chambers may vary depending on the capacity and the desired flexibility of the application means. Thus, one dispensing chamber may be arranged per conduit, meaning that the flow of the liquid medium to each conduit may be adjusted independently. Further, one dispensing chamber may be arranged per nozzle, providing a system comprising even more flexibility.

When the liquid medium is about to enter the dispensing chamber, the piston inside the dispensing chamber is in its stop position, the inlet is open, while the outlet is closed. The liquid medium is forced by the pump into the dispensing chamber through the inlet, thus causing the piston to move from the stop position towards the start position and filling the chamber with the liquid medium. When the piston has reached its start position as defined either by the maximum volume of the dispensing chamber or by the volume control means, the pump stops running, the inlet is closed, the outlet is opened, and the piston starts moving, for instance by action of the servomotor, from the start position towards the stop position, thus forcing the liquid medium through the outlet to the application means. When the piston reaches its stop position, the dispensing chamber is emptied, the outlet is closed, the inlet is open, and the cycle is repeated.

The pumping means according to the resent invention may be arranged to deliver the liquid medium to the nozzles at a speed from 0.4 ml/s to 5.4 ml/s per seedling. The speed of the liquid medium depends on the quality of the seedlings, and the nature of the liquid medium applied to the seedlings and the desired thickness of the deposited layer of liquid medium.

The present invention further relates to a method for application of a liquid medium to seedlings arranged in rows in a culture vessel. The method comprises the steps of:
a) providing a culture vessel comprising seedlings, the seedlings comprising trunks extending in a vertical direction and being arranged in rows in the culture vessel;
b) positioning a first aligning means between the rows of seedlings as described above either by inserting the first aligning means between the rows of seedlings, or by displacing the culture vessel comprising rows of seedlings in relation to the first aligning means such that the rows of seedlings are inserted in the aligning means and becomes positioned between the rulers of the aligning means; and
c) providing an application means arranged to deliver the liquid medium to the trunks of the seedlings, the application means being movable in the vertical direction.

The method according to the present invention further comprises the step of
d) delivering the liquid medium to the trunks of the seedlings during a vertical movement along the trunks of the seedlings.

As described above, the application of the liquid medium may be performed during a downward vertical movement, an upward vertical movement, or sequentially during upward and downward vertical movements. Application of the liquid medium during an upward vertical movement has the advantage of involving less risk of damaging the branches of the seedlings, since during an upward vertical movement of the application means along the trunk, the branches that may be caught by the application means will become aligned with the trunk, and released to their original position when the application of the liquid medium is completed and the application means is removed.

The speed of the application means during the delivery of the liquid medium may be from 10 mm/s to 80 mm/s. The speed of the application means is preferably adjustable and depends on the quality and properties of the seedlings, the nature of the liquid medium applied to the seedlings, and the desired thickness of the layer of the liquid medium.

The method according to the present invention may further comprise the step of inserting a second aligning means between the rows of seedlings perpendicularly to the first aligning means, in a case when the second aligning means is present. If the second aligning means is present, the step of inserting the second aligning means between the rows of seedlings perpendicularly to the first aligning means occurs between the steps b) and c), i.e. after the step of positioning the first aligning means between the rows of seedlings, but before the step of providing the application means.

The method according to the present invention may further comprise a step d') of inserting the application means between the rows of seedlings in a first horizontal direction parallel with the first aligning means. If this step is present, it occurs between steps c) and d), i.e. after the step of providing an application means, but before the step of delivering the liquid medium to the trunks of the seedlings.

Alternatively, step d') may be the step of inserting the application means between the rows of seedlings in a first horizontal direction parallel with the second aligning means, wherein this step occurs between steps c) and d).

The method of the present invention may further comprise a step d") of displacing the application means in a second horizontal direction being perpendicular to the first horizontal direction of the application means. If present, this step occurs between steps d') and d), i.e. after the step of inserting the application means between the rows of seedlings, but before the step of delivering the liquid medium to the trunks of the seedlings. As described above, the step of displacement of the application means in the second horizontal direction perpendicular to the first horizontal direction of the application means brings the nozzles of the application means closer to the trunks and at the same time locks the seedlings between the nozzles of the application means, thus improving the application accuracy.

The method according to the present invention may further comprise the step of lifting the seedlings from the culture vessel, for instance through the action of the plant lifting means disclosed above. If the step of lifting the seedlings is present, this step occurs immediately before step c), step d'), or step d"), i.e. immediately before providing the application means, before inserting the application means between the rows of seedlings, or before displacing the application means in a second horizontal direction.

### BRIEF DESCRIPTION OF THE DRAWINGS

Fig. 1 depicts the apparatus according to the present invention;
Fig. 2 shows the apparatus of the present invention, wherein the first aligning means is inserted between the rows of seedlings (seedlings not shown);
Fig. 2A depicts the apparatus of the present invention, wherein the application means comprises a supporting rim;
Fig. 3 shows the apparatus of the present invention, wherein the second aligning means is inserted between the rows of seedlings (seedlings not shown);
Fig. 3A illustrates a detailed view of the apparatus of the present invention, wherein the first and second aligning means are inserted between the rows of seedlings;
Fig. 3B is the detailed view of the apparatus shown in Fig. 3A seen from above;
Fig. 4 shows the apparatus of the present invention, wherein the seedlings are locked by the nozzles of the application means;
Fig. 4A is the view of the apparatus depicted in Fig. 4 seen from above;
Fig. 4B is a detailed view of the apparatus shown in Fig. 4;
Fig. 4C is a detailed view of the apparatus shown in Fig. 4;
Fig. 4D is a detailed view of the apparatus of the present invention, wherein the seedlings are locked by the nozzles of the application means, and wherein the application means comprises a supporting rim;
Fig. 5 illustrates the apparatus according to the present invention, wherein the application means is in its stop position;
Fig. 6 shows the apparatus wherein the application means is removed;
Fig. 7 depicts the apparatus of the present invention, wherein the first aligning means is removed;
Fig. 8 illustrates the apparatus wherein the second aligning means is removed, and wherein the culture vessel is released;
Fig. 9 depicts a perspective view of the pumping means of the apparatus according to the present invention, wherein the dispensing chambers are filled;
Fig. 10 depicts a side view of the pumping means illustrated in Fig. 9;
Fig. 11 depicts a perspective view of the pumping means of the apparatus according to the present invention, wherein the dispensing chambers are empty;
Fig. 12 depicts a side view of the pumping means illustrated in Fig. 11.

### DETAILED DESCRIPTION OF PREFERRED EMBODIMENTS

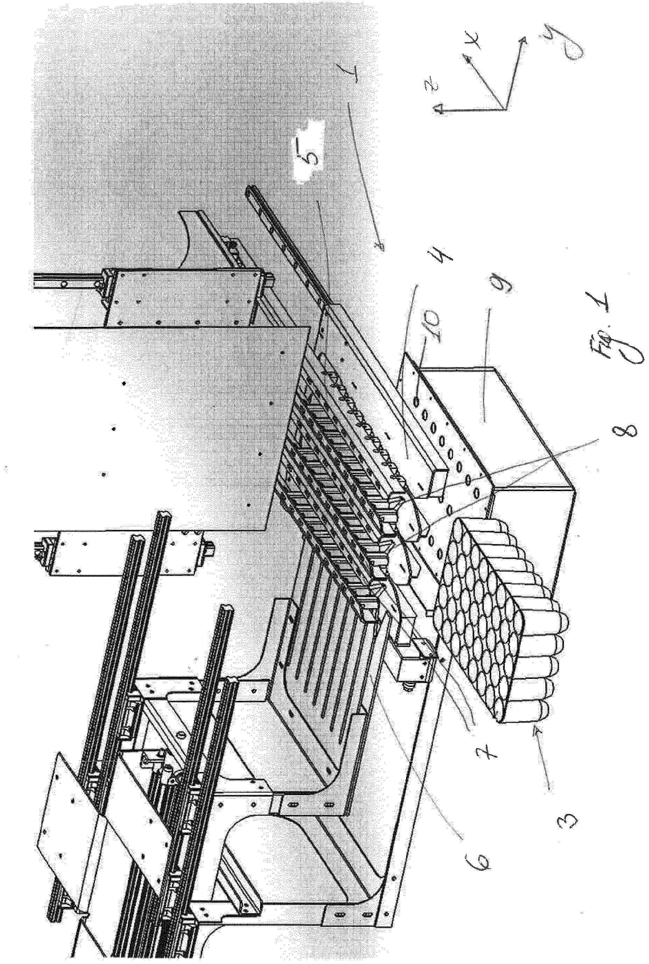

Fig. 1 illustrates the apparatus 1 for application of a liquid medium to the seedlings 2 (not shown) arranged in rows in a culture vessel 3. The culture vessel 3 depicted in Fig. 1 may as a maximum comprise forty seedlings, arranged in five rows comprising eight seedlings each. However, in the embodiment shown in Fig. 1, the culture vessel comprises twenty-four seedlings, arranged in three rows with eight seedlings in each row. In the embodiment depicted in Fig. 1, the apparatus 1 comprises a first aligning means 4 comprising nine rulers, a second aligning means 6 comprising four rulers, and an application means 5. Both the first and the second aligning means 4, 6 are comb-shaped. The application means 5 according to the embodiment shown in Fig. 1 is in the form of six conduits 7, each provided with a plurality of nozzles 8 such that four nozzles are directed towards each seedling 2. In order to achieve an even application of liquid medium, the nozzles 8 are evenly distributed along the circumference of the trunks of the seedlings 2 such that the angle between the nozzles is 90°. As mentioned above, the distance between the nozzle outlets should be small enough to minimize the distance from each of the nozzle outlets to the trunk, and large enough not to damage the seedling. The distance between the nozzle outlets measured between the adjacent edges of the nozzle outlets is 23 mm.

Apparatus 1 further comprises a plant lifting means 9 provided with a plurality of pushing bars 10 for pushing through the holes arranged at the bottom portion of the culture vessel thereby lifting the seedlings. In order to facilitate lifting of the seedlings, the apparatus may further comprise an irrigation means (not shown), arranged upstream from the portion of the apparatus depicted in Fig. 1. Passing through the irrigation means makes the culture medium in which the seedlings 2 are grown moist and soft, and therefore easy to move relatively the culture vessel 3 without damaging the root system of the seedlings 2 when the seedlings are lifted.

As may be seen in Fig. 1, the first aligning means 4 is positioned above the plant lifting means 9, and the application means 5 is arranged parallel with the first aligning means 4.

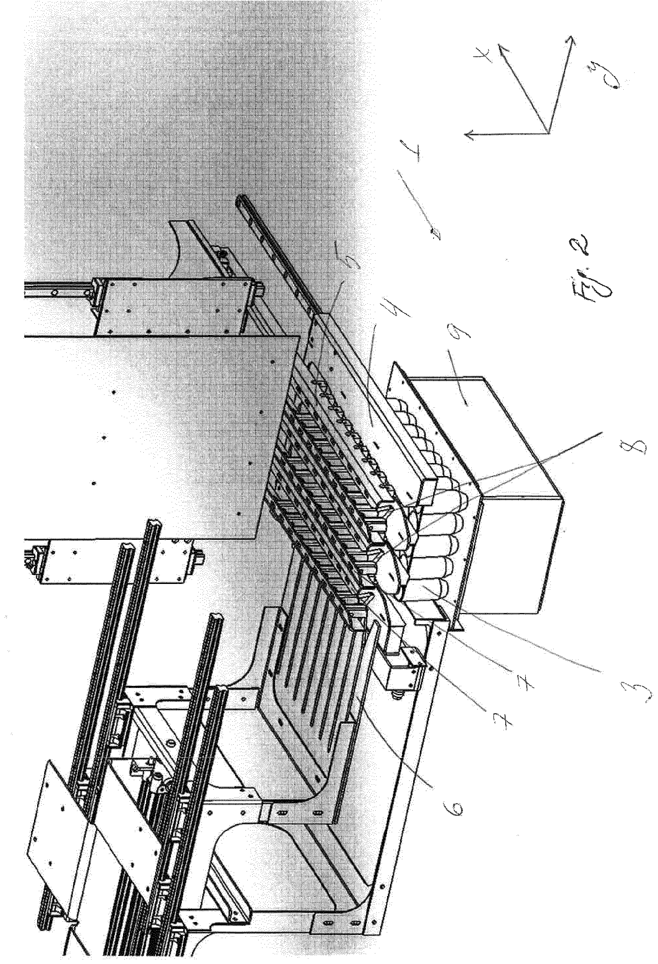

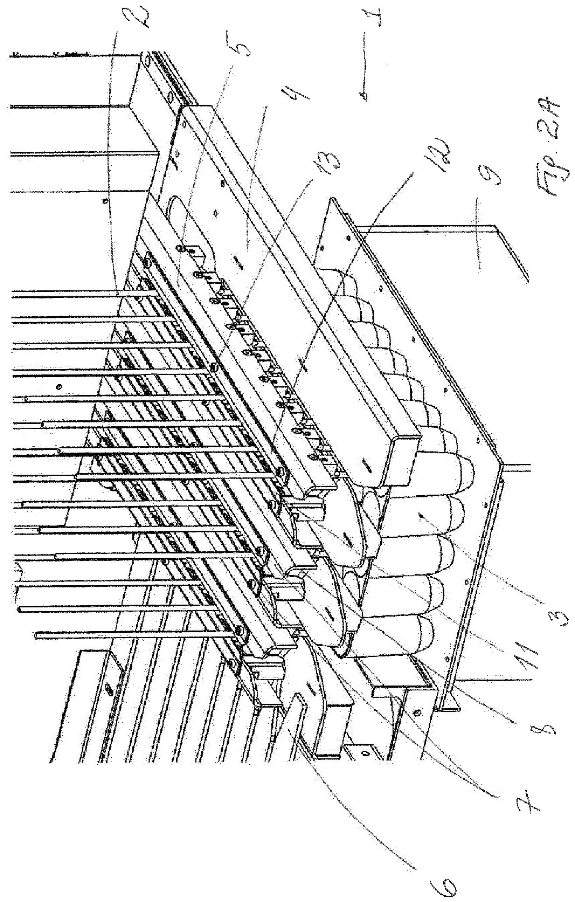

The culture vessel 3 is displaced in the horizontal direction x in relation to the first aligning means 4 by a displacement means (not shown), which for instance may be a conveyor belt or a pusher. Thus, the culture vessel 3 will take the position shown in Fig. 2, wherein the culture vessel is positioned above the plant lifting means 9, and the seedlings 2 (not shown) are inserted between the first aligning means 4 and application means 5.

In Fig. 2A, the conduits 7 of the application means comprise a supporting rim 11 running along each conduit 7. As mentioned above, the supporting rim 11 provides additional support for the seedlings 2, which allows greater variations in the diameter of the seedling trunks. The supporting rims 11 are attached to the upper portion of the conduits 7 by sandwiching the supporting rim 11 between the upper portion of the conduit 7 and a fastening strip of material 12 superimposed with the upper portion of the conduit 7, and attaching the fastening strip to the conduit by fastening means 13.

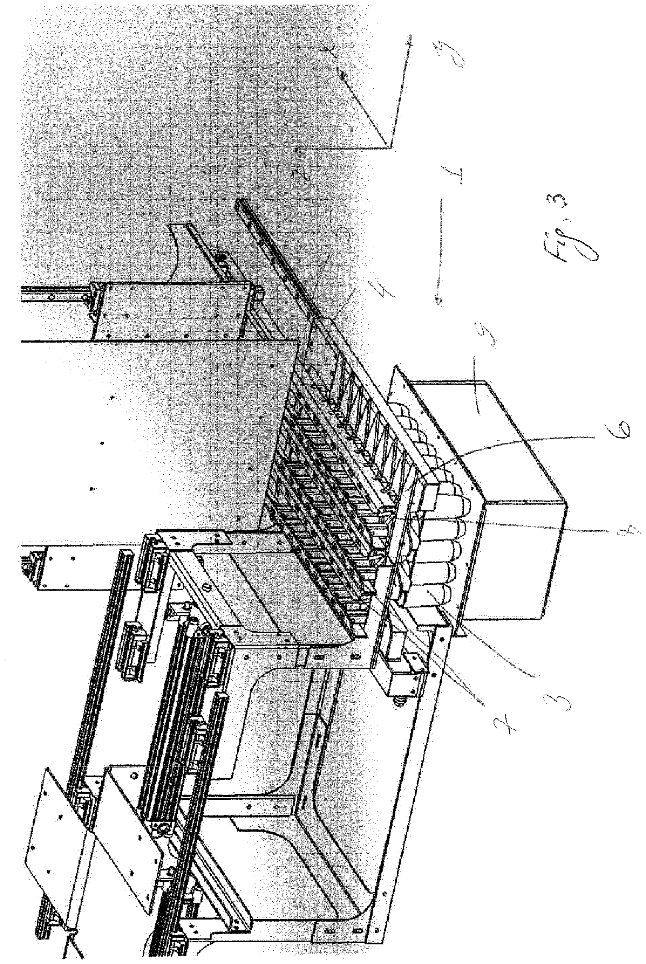

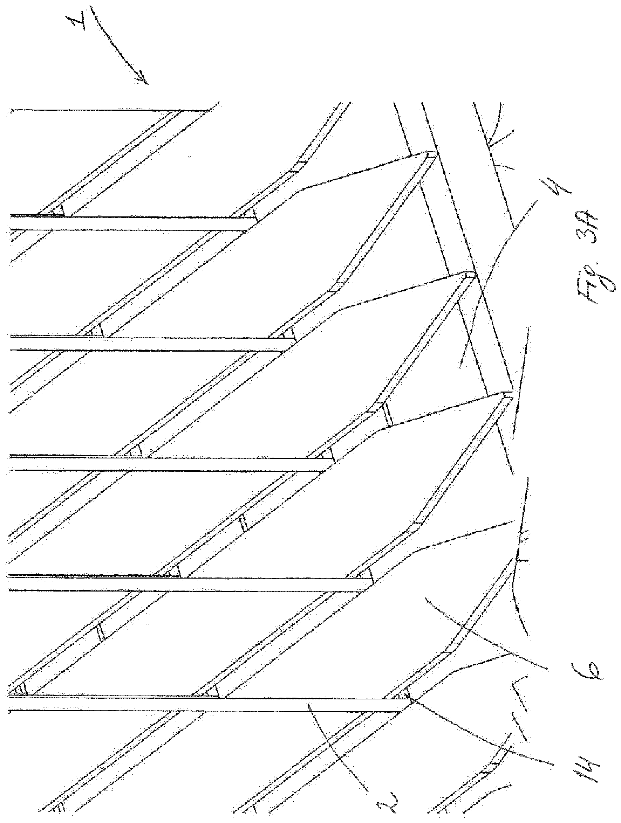

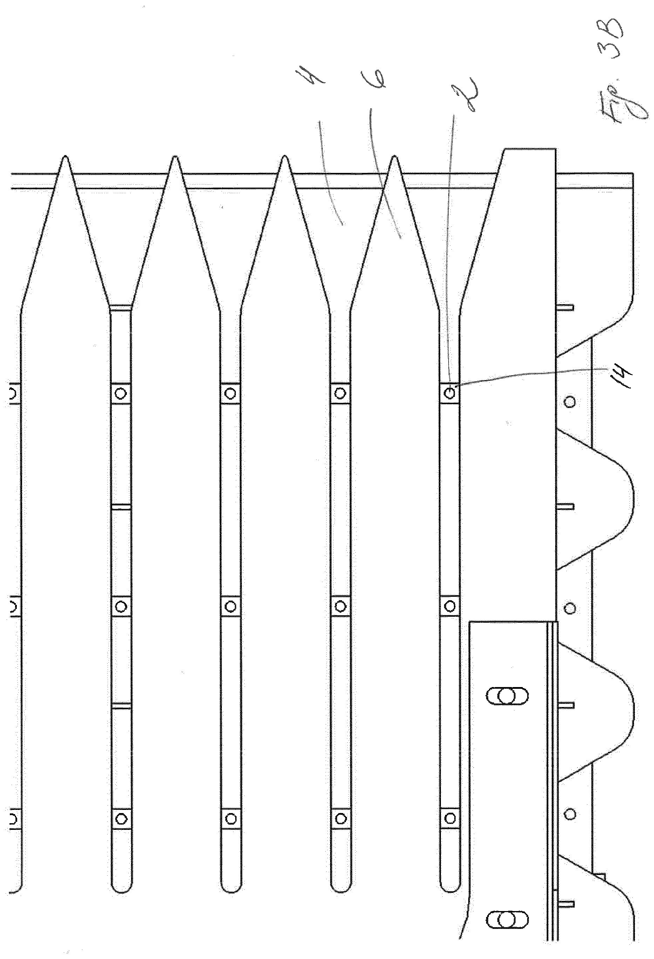

In the step shown in Fig. 3, the second aligning means 6 has been displaced in the second horizontal direction y perpendicular to the first horizontal direction x of the first aligning means 4, such that the second aligning means 6 is inserted between the rows of seedlings 2 (not shown) perpendicularly to the first aligning means 4. When the second aligning means 6 is inserted between the rows of seedlings 2 perpendicularly to the first aligning means 4, each seedling will be enclosed in a rectangular or square space 14 delimited by the first and second aligning means 4, 6 in a manner depicted in Fig. 3A and 3B. In the embodiment shown in Fig. 3A, the size of the space 14 enclosing each seedling is approximately 8x8 mm. As mentioned above, the second aligning means 6 securely holds the seedlings in the desired position, which increases the precision of the application step.

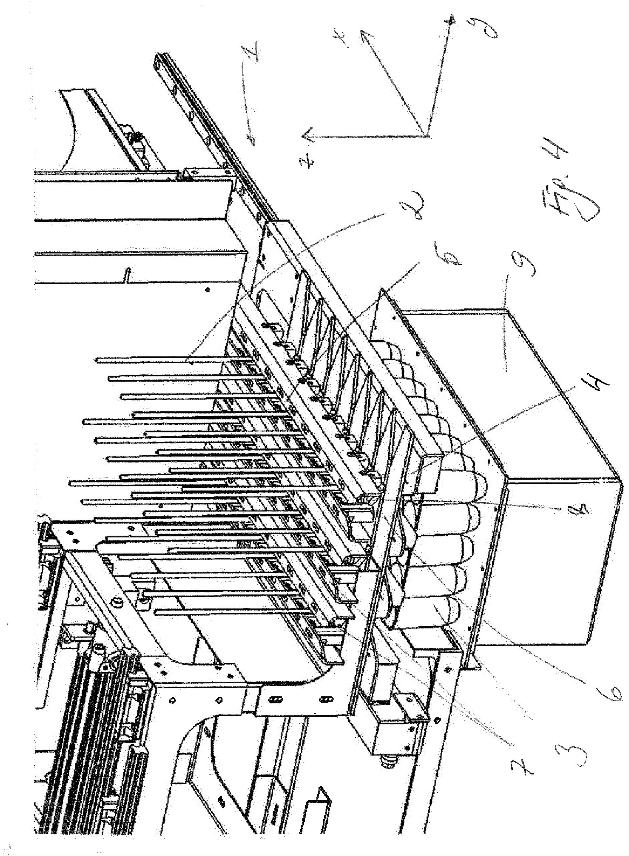

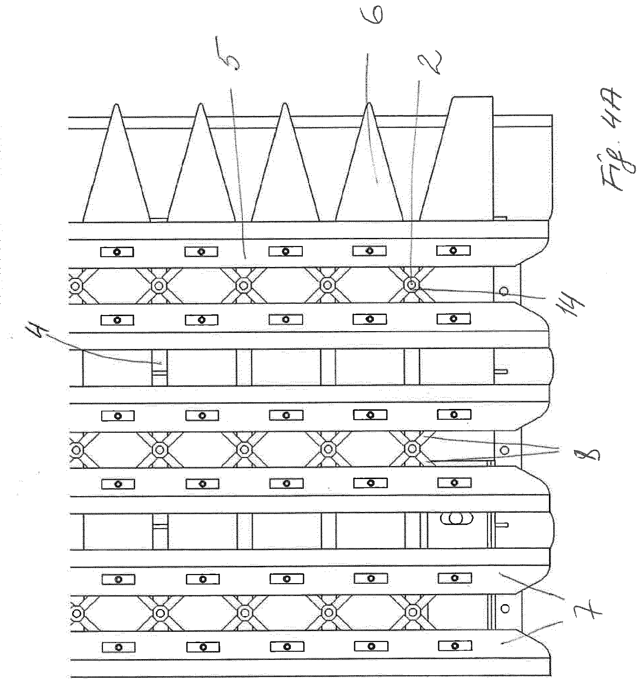

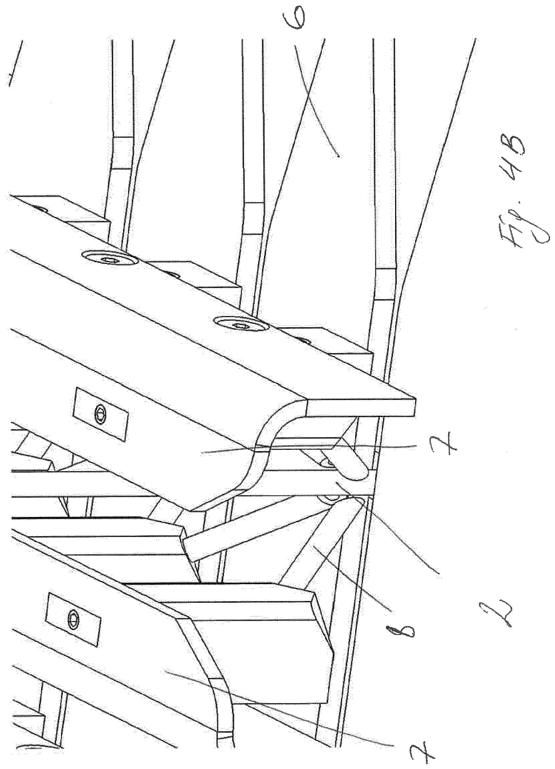

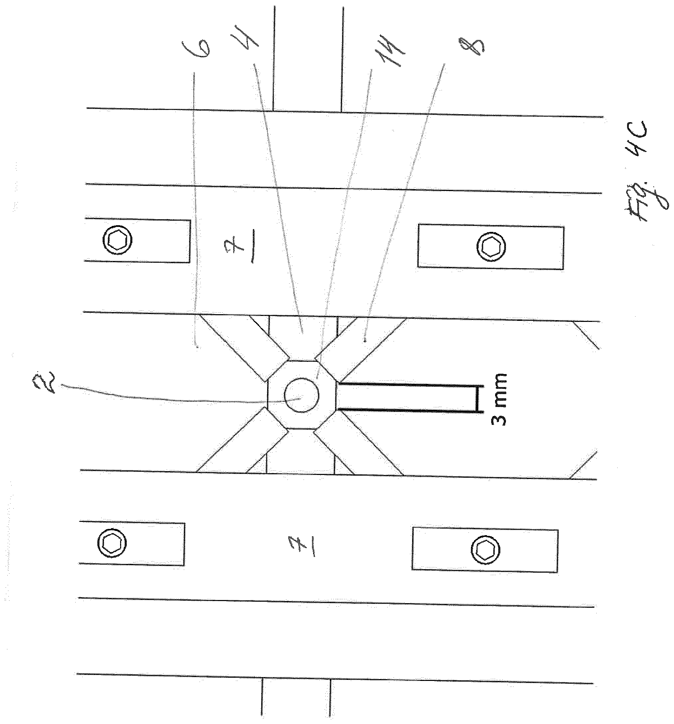

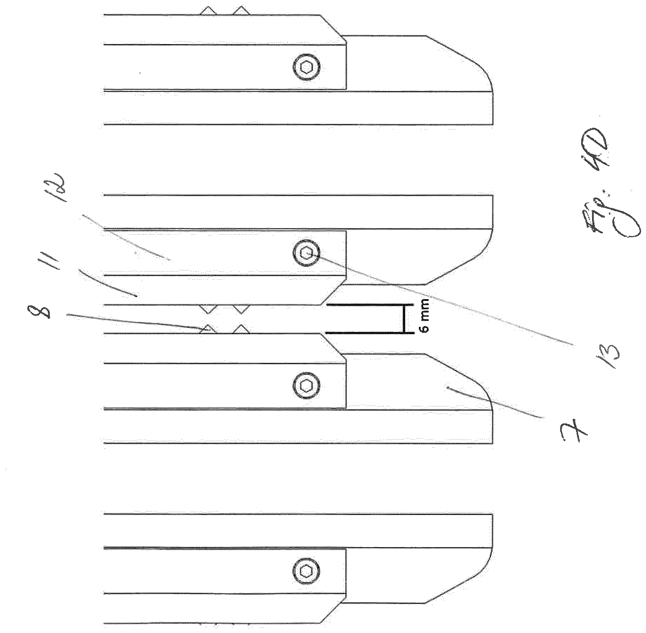

Figs. 4, 4A and 4B depicts the apparatus 1 according to the present invention, wherein the conduits 7 have been displaced in the second horizontal direction y, such that the distance between the conduits 7 and the trunks is diminished, and the seedlings 2 become locked by the nozzles 8, which will ensure accurate application of the liquid medium. The distance between the nozzle outlets measured between the adjacent edges of the nozzle outlets when the conduits have been displaced in the second horizontal direction y is 3 mm (Fig. 4C).

Fig. 4D shows the apparatus 1, wherein the conduits 7 have been displaced in the second horizontal direction y, and wherein the conduits 7 comprises the supporting rims 11. As may be seen in Fig. 4D, the distance between the outer edge portions of the supporting rims 11 arranged at two adjacent conduits 7 is 6 mm.

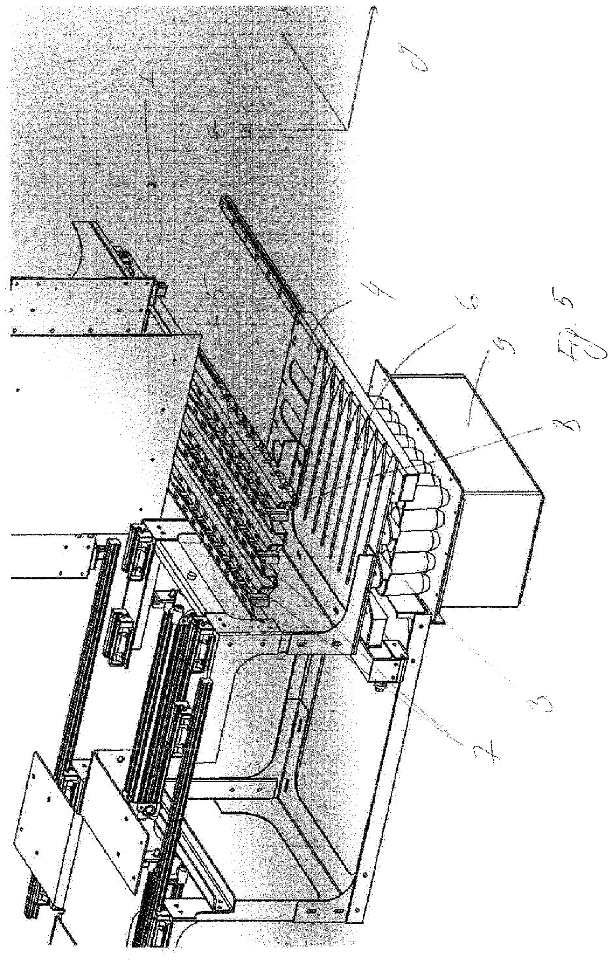

As discussed previously, the apparatus 1 according to the present invention provides application of the liquid medium to the seedlings during a vertical movement along the trunks of the seedlings 2. In the embodiment shown in Fig. 5, the application means 5 have been displaced upwards in the vertical direction z, and the liquid medium has been applied to the seedlings 2 (not shown). Thus, the position of the application means 5 depicted in Fig. 5 corresponds to the end point of the application step described above.

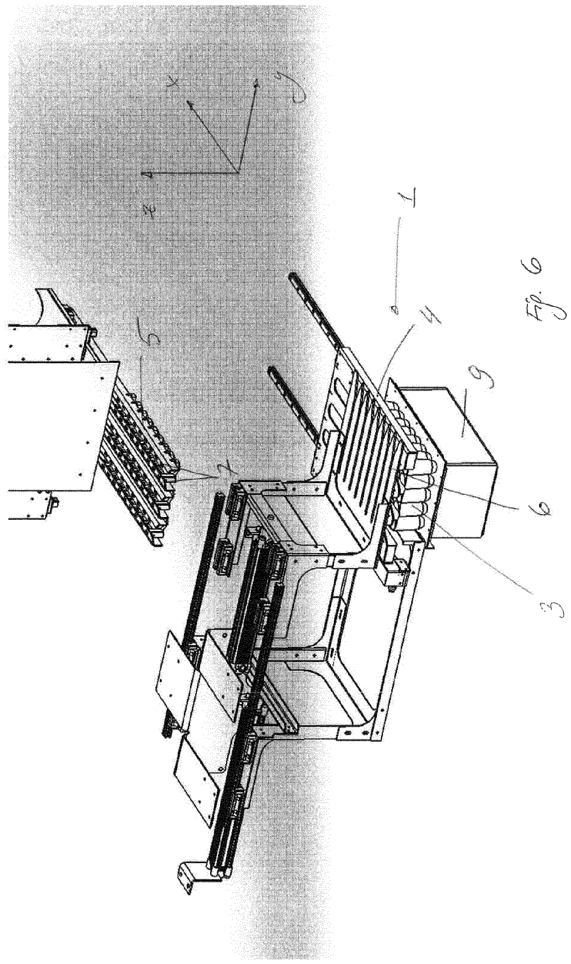

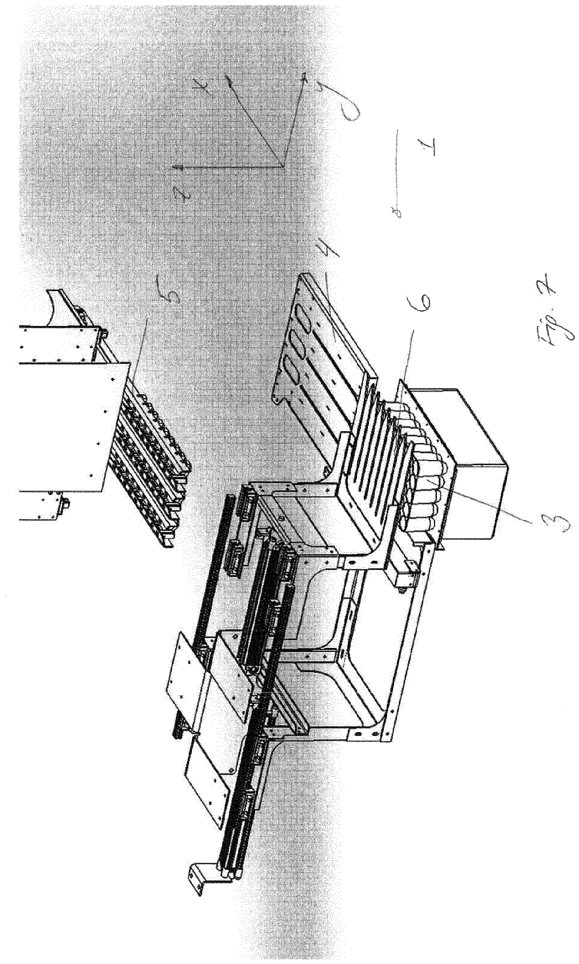

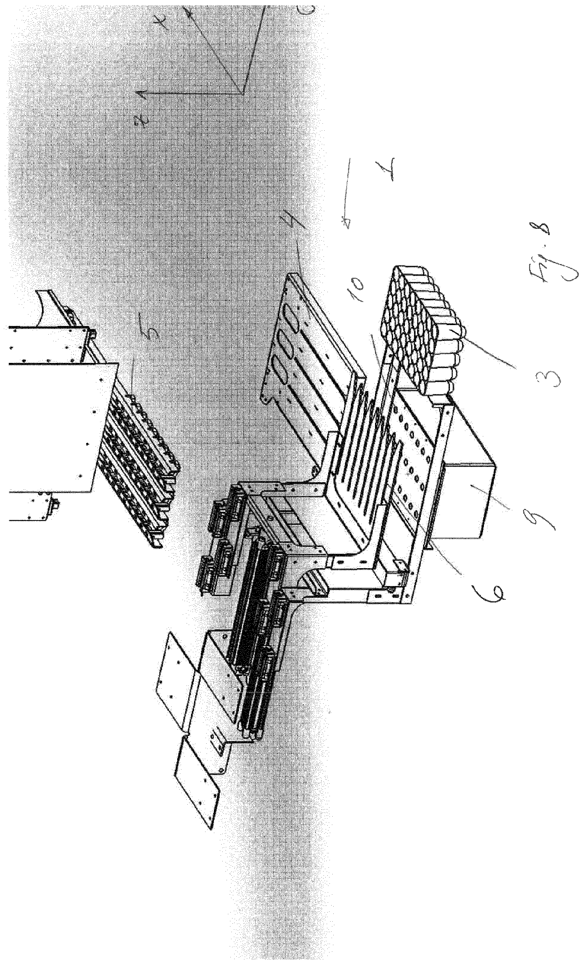

When the application step is completed, the conduits 7 of the application means 5 are displaced in the horizontal direction y, thus releasing the seedlings 2. Then, the application means 5 is displaced in the vertical direction z beyond the vertical extension of the seedlings, as shown in Fig. 6. Then, the first aligning means 4 is displaced in the horizontal direction z, such that the first aligning means 4 is retracted from the rows of the seedlings 2 (Fig. 7). Finally, the culture vessel 3 is displaced in the horizontal direction y, such that the seedlings 2 are released from the second aligning means, as shown in Fig. 8. The seedlings may then be subjected to the subsequent step in the treatment process, which may be shaking or drying.

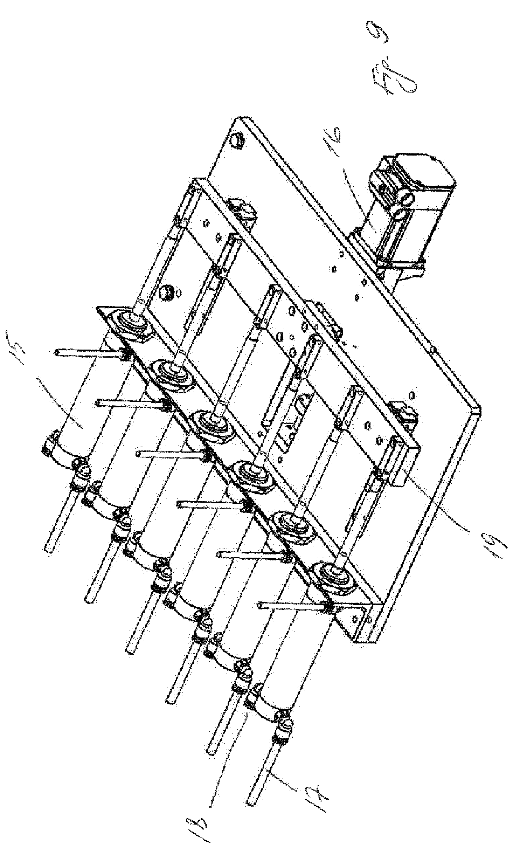

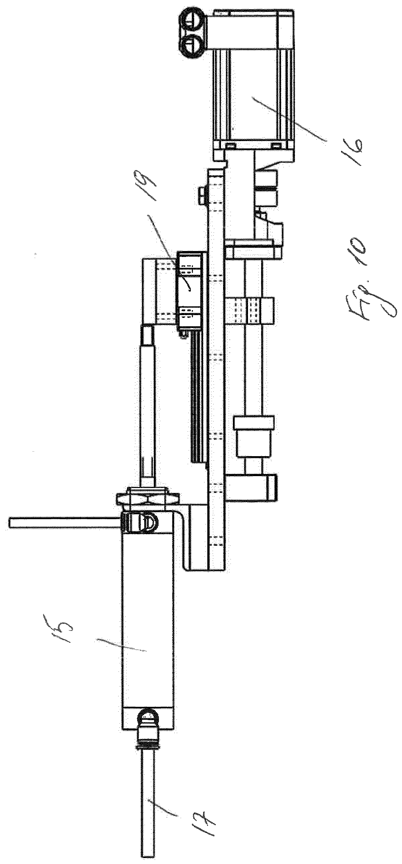

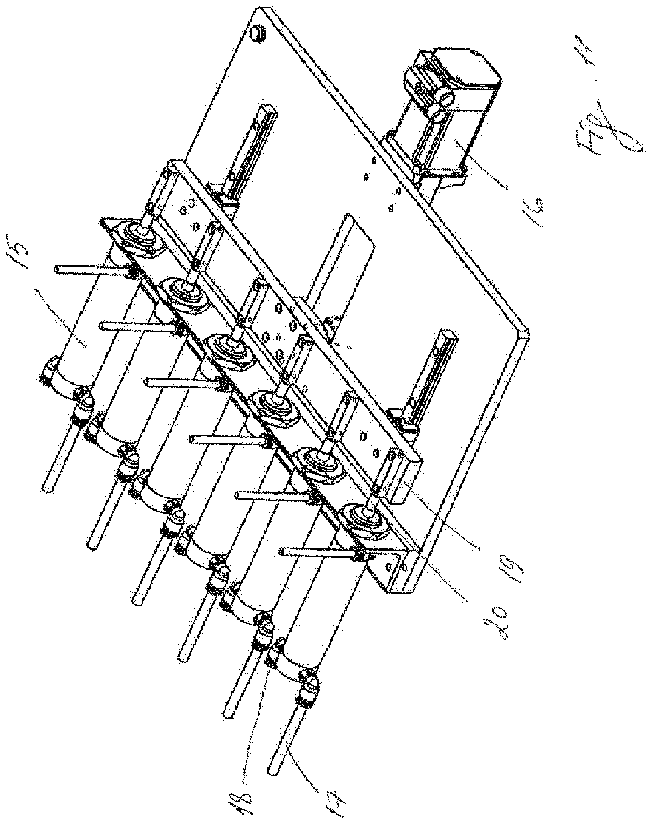

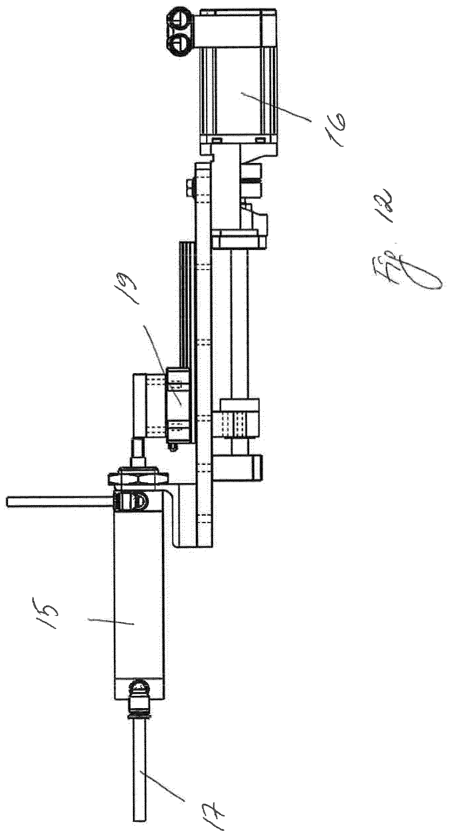

Fig. 9 depicts the pumping means which may be used in the apparatus of the present invention for delivering of liquid medium to the seedlings. As described above, the pumping means may comprise a membrane pump (not shown), a servomotor 16 and a plurality of dispensing chambers 15. Each of the dispensing chambers 15 may comprise an inlet 17, an outlet 18 and a piston 20 arranged inside the dispensing chamber 15. The piston 20 is movable inside the dispensing chamber 15 between a start position wherein the dispensing chamber is filled with the liquid medium (Figs. 9 and 10), and a stop position, wherein the piston 20 has emptied the dispensing chamber 15 by forcing the liquid medium through the outlet 18 out from the dispensing chamber 15, and into the application means 5 (Figs. 11 and 12). The volume of the dispensing chambers 15 may be varied by providing the dispensing chambers 15 with a volume control means 19, preferably in the form of a movable plate arranged outside the dispensing chambers 15, and being able to define the start position of the piston depicted in Figs. 9 and 10. The number of dispensing chambers may vary depending on the capacity and the desired flexibility of the application means. In the embodiment shown in Figs. 9-12, the pumping means comprises six dispensing chambers 15, one dispensing chamber 15 for each conduit 7.

When the liquid medium is about to enter the dispensing chamber 15, the piston 20 inside the dispensing chamber 15 is in its stop position, the inlet 17 is open, while the outlet 18 is closed, as shown in Figs. 11 and 12. The liquid medium is forced by the pump into the dispensing chamber 15 through the inlet 17, thus causing the piston 20 to move from the stop position towards the start position and filling the dispensing chamber 15 with the liquid medium. When the piston 20 has reached its start position as defined either by the maximum volume of the dispensing chamber 15 or by the volume control means 19, the pump stops running, the inlet 17 is closed, the outlet 18 is opened, and the piston 20 starts moving, for instance by action of the servomotor 16, from the start position towards the stop position, thus forcing the liquid medium through the outlet 18 to the application means 5. When the piston 20 reaches its stop position, the dispensing chamber 15 is emptied, the outlet 18 is closed, the inlet 17 is open, and the cycle is repeated.

Although the present invention has been described with reference to various embodiments, those skilled in the art will recognise that changes may be made without departing from the scope of the invention. It is intended that the detailed description be regarded as illustrative and that the appended claims are intended to define the scope of the invention.

## Claims

1. An apparatus (1) for application of a liquid medium to seedlings (2), said seedlings comprising trunks extending in a vertical direction z and being arranged in rows in a culture vessel (3), said apparatus (1) comprising a first aligning means (4) movable in a first horizontal direction x, a displacement means arranged to provide a displacing movement between said culture vessel (3) and said first aligning means (4), said first aligning means (4) being arranged to be inserted between said rows of said seedlings (2), and an application means (5) arranged to deliver said liquid medium to the trunks of said seedlings (2), said application means (5) being movable in the vertical direction z, **characterized in that** said application means (5) is arranged to deliver said liquid medium to said trunks of said seedlings (2) during a vertical movement along said trunks of said seedlings (2).

2. The apparatus (1) according to claim 1, wherein said application means (5) is arranged to deliver said liquid medium to said trunks of said seedlings (2) during an upward vertical movement along said trunks of said seedlings (2).

3. The apparatus (1) according to any one of the preceding claims, wherein said application means (5) is movable in a horizontal direction.

4. The apparatus (1) according to any one of the preceding claims, wherein said apparatus (1) further comprises a second aligning means (6), said second aligning means (6) being movable in a second horizontal direction y perpendicular to the first horizontal direction x of said first aligning means (4), such that said second aligning means (6) may be inserted between said rows of said seedlings (2) perpendicularly to said first aligning means (4).

5. The apparatus (1) according to any one of the preceding claims, wherein said application means (5) comprises a plurality of conduits (7), each conduit (7) comprising a plurality of nozzles (8).

6. The apparatus (1) according to claim 5, wherein said conduits (7) are movable in a first horizontal direction being parallel with the first horizontal direction x of said first aligning means (4), such that said conduits (7) may be inserted between said rows of said seedlings (2) parallel with said first aligning means (4).

7. The apparatus (1) according to claim 5, wherein said conduits (7) are movable in a first horizontal direction being parallel with the second horizontal direction y of said second aligning means (6), such that said conduits (7) may be inserted between said rows of said seedlings (2) parallel with said second aligning means (6).

8. The apparatus (1) according to any one of claims 5-7, wherein said nozzles (8) are arranged such that at least two nozzles (8) are directed towards each of said seedlings (2), such as from two to six nozzles (8), preferably four nozzles (8).

9. The apparatus (1) according to any one of claims 5-8, wherein said conduits (7) further comprises a supporting rim (11) running along each conduit (7), wherein said supporting rim (11) comprises an outer edge portion and is arranged at the upper portion of each conduit (7).

10. The apparatus (1) according to claim 9, wherein the distance between the outer edge portions of the supporting rims (11) arranged at two adjacent conduits (7) may be 4-11 mm, preferably 5-8 mm, more preferably 6 mm.

11. The apparatus (1) according to claims 5-10, wherein said conduits (7) are movable in two perpendicular horizontal directions.

12. The apparatus (1) according to any one of the preceding claims, wherein said apparatus (1) further comprises a plant lifting means (9).

13. The apparatus (1) according to claim 12, wherein said plant lifting means (9) is arranged below said culture vessel (3) in said vertical direction z and comprises a plurality of pushing bars (10) for pushing each of the seedlings (2) in an upward vertical direction.

14. A method for application of a liquid medium to seedlings (2) arranged in rows in a culture vessel (3), said method comprising the steps of:
a) providing a culture vessel (3) comprising seedlings (2), said seedlings (2) comprising trunks extending in a vertical direction z and being arranged in rows in said culture vessel (3);
b) positioning a first aligning means (4) between said rows of said seedlings (2);
c) providing an application means (5) arranged to deliver said liquid medium to the trunks of said seedlings (2), said application means (5) being movable in the vertical direction z;
**characterized in that** said method further comprises the step of
d) delivering said liquid medium to said trunks of said seedlings (2) during a vertical movement along said trunks of said seedlings (2).

15. The method according to claim 14, wherein said method further comprises step d') of inserting said application means (5) between said rows of said seedlings (2) in a first horizontal direction parallel with said first aligning means (4), wherein this step occurs between steps c) and d).

## Patentansprüche

1. Vorrichtung (1) zur Anwendung eines flüssigen Mediums bei Sämlingen (2), wobei die Sämlinge einen Stamm umfassen, der in einer senkrechten Richtung z verläuft, und in Reihen in einem Kulturgefäß (3) angeordnet sind, wobei die Vorrichtung (1) ein erstes Ausrichtungsmittel (4), das in einer ersten waagerechten Richtung x bewegbar ist, ein Verschiebungsmittel, das so angeordnet ist, dass es für eine Verschiebebewegung zwischen dem Kulturgefäß (3) und dem ersten Ausrichtungsmittel (4) sorgt, wobei das erste Ausrichtungsmittel (4) so angeordnet ist, dass es zwischen die Reihen der Sämlinge (2) gesetzt wird, sowie ein Anwendungsmittel (5) umfasst, das so angeordnet ist, dass es das flüssige Medium an die Stämme der Sämlinge (2) abgibt, wobei das Anwendungsmittel (5) in der senkrechten Richtung z bewegbar ist, **dadurch gekennzeichnet, dass** das Anwendungsmittel (5) so angeordnet ist, dass es das flüssige Medium während einer Senkrechtbewegung an den Stämmen der Sämlinge (2) entlang an die Stämme der Sämlinge (2) abgibt.

2. Vorrichtung (1) nach Anspruch 1, wobei das Anwendungsmittel (5) so angeordnet ist, dass es das flüssige Medium während einer senkrechten Aufwärtsbewegung an den Stämmen der Sämlinge (2) entlang an die Stämme der Sämlinge (2) abgibt.

3. Vorrichtung (1) nach einem der vorhergehenden Ansprüche, wobei das Anwendungsmittel (5) in einer waagerechten Richtung bewegbar ist.

4. Vorrichtung (1) nach einem der vorhergehenden Ansprüche, wobei die Vorrichtung (1) ferner ein zweites Ausrichtungsmittel (6) umfasst, wobei das zweite Ausrichtungsmittel (6) in einer zweiten waagerechten Richtung y lotrecht zur ersten waagerechten Richtung x des ersten Ausrichtungsmittels (4) derart bewegbar ist, dass das zweite Ausrichtungsmittel (6) zwischen die Reihen der Sämlinge (2) lotrecht zu dem ersten Ausrichtungsmittel (4) gesetzt werden kann.

5. Vorrichtung (1) nach einem der vorhergehenden Ansprüche, wobei das Anwendungsmittel (5) eine Vielzahl von Leitungen (7) umfasst, wobei jede Leitung (7) eine Vielzahl von Düsen (8) umfasst.

6. Vorrichtung (1) nach Anspruch 5, wobei die Leitungen (7) in einer ersten waagerechten Richtung bewegbar sind, die parallel zur ersten waagerechten Richtung x des ersten Ausrichtungsmittels (4) verläuft, sodass die Leitungen (7) zwischen die Reihen der Sämlinge (2) parallel zu dem ersten Ausrichtungsmittel (4) gesetzt werden können.

7. Vorrichtung (1) nach Anspruch 5, wobei die Leitungen (7) in einer ersten waagerechten Richtung bewegbar sind, die parallel zur zweiten waagerechten Richtung y des zweiten Ausrichtungsmittels (6) verläuft, sodass die Leitungen (7) zwischen die Reihen der Sämlinge (2) parallel zu dem zweiten Ausrichtungsmittel (6) gesetzt werden können.

8. Vorrichtung (1) nach einem der Ansprüche 5 bis 7, wobei die Düsen (8) derart angeordnet sind, dass mindestens zwei Düsen (8) auf jeden der Sämlinge (2) gerichtet sind, beispielsweise zwischen zwei und sechs Düsen (8), vorzugsweise vier Düsen (8).

9. Vorrichtung (1) nach einem der Ansprüche 5 bis 8, wobei die Leitungen (7) ferner einen Stützrand (11) umfassen, der jede Leitung (7) entlang verläuft, wobei der Stützrand (11) einen Außenrandabschnitt umfasst und am oberen Abschnitt jeder Leitung (7) angeordnet ist.

10. Vorrichtung (1) nach Anspruch 9, wobei der Abstand zwischen den Außenrandabschnitten der Stützränder (11), die an zwei benachbarten Leitungen (7) angeordnet sind, 4 bis 11 mm, vorzugsweise 5 bis 8 mm, bevorzugter 6 mm betragen kann.

11. Vorrichtung (1) nach Anspruch 5 bis 10, wobei die Leitungen (7) in zwei zueinander lotrechten waagerechten Richtungen bewegbar sind.

12. Vorrichtung (1) nach einem der vorhergehenden Ansprüche, wobei die Vorrichtung (1) ferner ein Pflanzenanhebemittel (9) umfasst.

13. Vorrichtung (1) nach Anspruch 12, wobei das Pflanzenanhebemittel (9) unter dem Kulturgefäß (3) in der senkrechten Richtung z angeordnet ist und eine Vielzahl von Schubstangen (10) zum Schieben von jedem der Sämlinge (2) in eine senkrechte Aufwärtsrichtung umfasst.

14. Verfahren zur Anwendung eines flüssigen Mediums bei Sämlingen (2), die in Reihen in einem Kulturgefäß (3) angeordnet sind, wobei das Verfahren folgende Schritte umfasst:
a) Bereitstellen eines Kulturgefäßes (3) mit Sämlingen (2), wobei die Sämlinge (2) einen Stamm umfassen, der in einer senkrechten Richtung z verläuft, und in dem Kulturgefäß (3) in Reihen angeordnet sind;
b) Platzieren eines ersten Ausrichtungsmittels (4) zwischen den Reihen der Sämlinge (2);
c) Bereitstellen eines Anwendungsmittels (5), das so angeordnet ist, dass es das flüssige Medium an die Stämme der Sämlinge (2) abgibt, wobei das Anwendungsmittel (5) in der senkrechten Richtung z bewegbar ist;
**dadurch gekennzeichnet, dass** das Verfahren ferner folgenden Schritt umfasst:
d) Abgeben des flüssigen Mediums an die Stämme der Sämlinge (2) während einer Senkrechtbewegung an den Stämmen der Sämlinge (2) entlang.

15. Verfahren nach Anspruch 14, wobei das Verfahren ferner Schritt d') zum Setzen des Anwendungsmittels (5) zwischen die Reihen der Sämlinge (2) in einer ersten waagerechten Richtung parallel zu dem ersten Ausrichtungsmittel (4) umfasst, wobei dieser Schritt zwischen Schritt c) und d) erfolgt.

## Revendications

1. Appareil (1) destiné à l'application d'un milieu liquide sur des semis (2), lesdits semis comprenant des troncs s'étendant dans une direction verticale z et étant agencés en rangées dans un récipient de culture (3), ledit appareil (1) comprenant un premier moyen d'alignement (4) déplaçable dans une première direction horizontale x, un moyen de déplacement arrangé pour obtenir un mouvement de déplacement entre ledit récipient de culture (3) et ledit premier moyen d'alignement (4), ledit premier moyen d'alignement (4) étant agencé pour être inséré entre lesdites rangées desdits semis (2), et un moyen d'application (5) agencée pour livrer ledit milieu liquide aux troncs desdits semis (2), ledit moyen d'application (5) étant déplaçable dans la direction verticale z, **caractérisé en ce que** ledit moyen d'application (5) est agencée pour livrer ledit milieu liquide auxdits troncs desdits semis (2) pendant un mouvement vertical le long desdits troncs desdits semis (2).

2. Appareil (1) selon la revendication 1, dans lequel ledit moyen d'application (5) est agencé pour livrer ledit milieu liquide auxdits troncs desdits semis (2) pendant un mouvement vertical ascendant le long desdits troncs desdits semis (2).

3. Appareil (1) selon l'une quelconque des revendications précédentes, dans lequel ledit moyen d'application (5) est déplaçable dans une direction horizontale.

4. Appareil (1) selon l'une quelconque des revendications précédentes, dans lequel ledit appareil (1) comprend en outre un second moyen d'alignement (6), ledit second moyen d'alignement (6) étant déplaçable dans une seconde direction horizontale y perpendiculaire à la première direction horizontale x dudit premier moyen d'alignement (4), de sorte que ledit second moyen d'alignement (6) puisse être inséré entre les étrangers desdits semis (2) de manière perpendiculaire audit premier moyen d'alignement (4).

5. Appareil (1) selon l'une quelconque des revendications précédentes, dans lequel ledit moyen d'application (5) comprend une pluralité de canalisations (7), chaque canalisation (7) comprenant une pluralité de buses (8).

6. Appareil (1) selon la revendication 5, dans lequel lesdites canalisations (7) sont déplaçables dans une première direction horizontale étant parallèle à la première direction horizontale x dudit premier moyen d'alignement (4), de sorte que lesdites canalisations (7) puissent être insérées entre lesdites rangées desdits semis (2) de manière parallèle audit premier moyen d'alignement (4).

7. Appareil (1) selon la revendication 5, dans lequel lesdites canalisations (7) sont déplaçables dans une première direction horizontale étant parallèle à la seconde direction horizontale y dudit second moyen d'alignement (6) de sorte que lesdites canalisations (7) puissent être insérées entre lesdites rangées desdits semis (2) de manière parallèle audit second moyen d'alignement (6).

8. Appareil (1) selon l'une quelconque des revendications 5 à 7, dans lequel lesdites buses (8) sont agencées de sorte qu'au moins deux buses (8) sont dirigées vers chacun desdits semis (2), de sorte qu'entre deux et six buses (8), de préférence quatre buses (8).

9. Appareil (1) selon l'une quelconque des revendications 5 à 8, dans lequel lesdites canalisations (7) comprennent en outre une bordure de support (11) s'étendant le long de chaque canalisation (7), dans lequel ladite bordure de support (11) comprend une partie de bord externe et est agencée au niveau de la partie supérieure de chaque canalisation (7).

10. Appareil (1) selon la revendication 9, dans lequel la distance entre les parties de bord externe des bordures de support (11) agencées au niveau de deux canalisations adjacentes (7) peut être comprise entre 4 et 11 mm, de préférence comprise entre 5 et 8 mm, plus préférablement de 6 mm.

11. Appareil (1) selon l'une quelconque des revendications 5 à 10, dans lequel lesdites canalisations (7) sont déplaçables dans deux directions horizontales perpendiculaires.

12. Appareil (1) selon l'une quelconque des revendications précédentes, dans lequel ledit appareil (1) comprend en outre un moyen de levage de plante (9).

13. Appareil (1) selon la revendication 12, dans lequel ledit moyen de levage de plante (9) est agencé en dessous dudit récipient de culture (3) dans ladite direction verticale z et comprend une pluralité de barres de poussée (10) permettant de pousser chacun des semis (2) dans une direction verticale ascendante.

14. Procédé d'application d'un milieu liquide sur des semis (2) agencés en rangées dans un récipient de culture (3), ledit composé comprenant les étapes consistant à :
a) obtenir un récipient de culture (3) comprenant des semis (2), lesdits semis (2) comprenant des troncs s'étendant dans une direction verticale z et étant agencés en rangées dans ledit récipient de culture (3) ;
b) positionner un premier moyen d'alignement (4) entre lesdites rangées desdits semis (2) ;
c) obtenir un moyen d'application (5) agencée pour livrer ledit milieu liquide aux troncs desdits semis (2), ledit moyen d'application (5) étant déplaçable dans la direction verticale z ;
**caractérisé en ce que** ledit procédé comprend en outre l'étape consistant à :
d) livrer ledit milieu liquide auxdits troncs desdits semis (2) pendant un mouvement vertical le long desdits troncs desdits semis (2).

15. Procédé selon la revendication 14, dans lequel ledit procédé comprend en outre l'étape d') d'insertion dudit moyen d'application (5) entre lesdites rangées desdits semis (2) dans une première direction horizontale parallèle audit premier moyen d'alignement (4), dans lequel cette étape se déroule entre les étapes c) et d).
